(19) Europäisches Patentamt
European Patent Office
Office européen des brevets

(11) **EP 2 169 424 A1**

(12) **EUROPEAN PATENT APPLICATION**

(43) Date of publication:
**31.03.2010 Bulletin 2010/13**

(51) Int Cl.:
***G01S 7/52*** *(2006.01)*

(21) Application number: **08163577.3**

(22) Date of filing: **03.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Esaote S.p.A.**
**20122 Milano (IT)**
• **Actis Active Sensors S.r.l.**
**50041 Calenzano (IT)**

(72) Inventors:
• **Torricelli, Gionatan**
**50144 Firenze (IT)**
• **Masotti, Leonardo**
**50010 Sesto Fiorentino (FI) (IT)**

(74) Representative: **Bessi, Lorenzo**
**Esaote S.p.A.**
**Via di Caciolle, 15**
**50127 Firenze (IT)**

(54) **Method and device for determining local characteristics of an object, particularly with ultrasounds**

(57)   The invention relates to a method for determining local characteristics of a target object comprising the following steps:
- transmitting a signal into said object;
- receiving reflection and/or transmission and/or scattering and/or diffraction and/or matter excitation signal or signals generated by the object in response to said signal;
- extracting the phase or a parameter correlated to the phase of such response signal or signals;
- applying one or more mathematical operators to such phase or parameter to determine one or more local parameters;
- identifying area or areas of the object having common propagation properties from one or more of such local parameters;
- determining direct or indirect local quantitative information on the physical properties of the target from at least one of said local parameters or a combination thereof as a function of the type of propagation identified in such area or areas.
   Also a corresponding device is disclosed.

Fig. 11

**Description**

The invention relates to the field of characterization of a target object, a medium or a region of interest by determining the modifications induced to a wave propagating through such object, medium or region.

It has long been known that elastic, electromagnetic or acoustic waves in homogeneous and layered environments in the frequency range of a fraction of a cycle per second up to hundreds of millions of cycles per second and higher can be propagated through many solids and liquids. Elastic waves are waves that propagate through solids, and have components of particle motion both parallel (longitudinal, or pressure, wave) and perpendicular (shear wave) to the direction of propagation of the wave energy itself. In contrast to this, acoustic waves are those waves that generate particle motion that is exclusively parallel to the propagation of wave energy. Electromagnetic waves have components of variation of field strength solely in the direction perpendicular to the direction of propagation.

Many radiology techniques in the medical field or in not-destructive testing involve propagating a wave through a structure to be analysed and determining the modification of one or more parameters of the wave induced by the interaction with such structure. By detecting such modifications through an analysis of the signal received by appropriate transducers/receivers, one or more physical parameter of the structure can be analysed. Ionising and not ionising radiations are usually employed for the purpose, the type of radiation used been function of the nature of the object investigated and of the physical parameter which has to be extracted.

In the ultrasound field, for example, the softness of an insonified object has been proved to be correlated with the backscattered signal amplitude (echogenicity). This is the basis for the well-known echographic inspections where the amplitude, and thus the power, of the reflected ultrasonic echo is used for providing an image of the object in the form of pixels of different brightness located on a bi-dimensional or three-dimensional image. However, such images, although powerful, are not representative of the value assumed by some important structural parameters and therefore are not extensively used for typing objects.

The wave velocity, also called speed of propagation, is an important parameter which has been found to be more deeply related to physical characteristics of an object. In the medical field, for example, the measurement of the velocity of a wave propagating through an object or tissue to be investigated has been extensively used as an important diagnosis tool for a great variety of diseases and alterations. In fact, the speed of propagation can be related to density, elasticity, degree of blood perfusion, hydration and temperature of the tissue. Particularly, it can be shown from the theory of acoustic wave propagation that for a sound wave propagating in a medium, the wave velocity is

$$v_a = \sqrt{\frac{\rho_m}{c_e}}$$

where $\rho_m$ is the density and $c_e$ is the elastic constant of the considered medium.
For details see for example Gordon S. Kino, Acoustic Waves: Devices, Imaging, and Analog Signal Processing, Prentice-Hall, INC., Englewood Cliffs, New Jersey, 1987, ISBN 0-13-003047-3 025.

The diagnosis field where speed of propagation detection has been extensively exploited is the in-vivo bone strength evaluation since variations in bone density due to osteoporosis or to physical variation for traumatic events have been proved detectable through ultrasounds. Speed of propagation has also been used for strength evaluation in musculoskeletal tissues and for tissue organization in soft tissue. US patents n. 4,926,870, 4,913,157, 4,361,154 and 5,817,018 disclose some examples on how to measure the global speed of propagation with time of flight estimations. These known techniques are based on the estimation of time of flight of waves, assuming the propagation path known a priori. The propagation speed is considered constant and thus computed simply as a ratio between space (the propagation path) and time necessary for the wave to propagate through such path.

More recent techniques have been developed in order to perform a more accurate estimation of the speed of propagation by introducing some corrections taking into account the contribute of soft tissues surrounding the bone under analysis as disclosed, for example, in US patents n. 5,458,130, 6,221,019, 6,322,507, 6,328,695, 6,899,680 and 7,112,173. Time of flight estimation through multiple lines of sight has also been used for biological region of interest comprising multiple different tissues (see for example US patents n. 4,807,635 and 4,777,958).

Similar techniques have been exploited for density evaluation of different tissue categories like superficial soft tissues and extracorporeal diluted blood as respectively disclosed in US patents n. 5,115,808 and 5,453,576, while US patent n. 7,291,109 discloses how infant hydration can be assessed through a measurement of global speed of propagation in liver and muscle tissues.

The speed of propagation can also be measured by means of resonance spectroscopy of the received signal which furnishes an alternative way to estimate the mean global propagation velocity through a predefined path through signal spectrum analysis as taught by US patent n. 5,062,296.

However all these techniques are based on a global propagation speed estimation which cannot reveal structural variations and thus cannot be used for typing an object. As the propagation speed has been proved strictly related to physical properties of tissues, local estimations of such parameter would allow to provide a two-dimensional or three-dimensional map giving an immediate grasp of the structural organization of tissues thus improving the diagnostic power.

Unfortunately, a direct estimation of local values of the propagation speed is not an easy task to be performed due to the numerous factors influencing such parameter. Several attempts have been made to locally estimate propagation speed as those disclosed, for example, in US patent n. 5,588,032. Such methods are essentially based on solving the so-called inverse scattering problem which requires a relevant amount of computation capacity and time usage. This renders these methods rather complicated although extremely powerful.

The applicant has now observed that the phase of a wave can be smartly used for determining one or more parameters correlated to physical properties of a target object to be typed.

Some scientific works have considered the possibility to extract structural information from the revealed phase signal by considering its statistical distribution. See for example L. Weng, J. M. Reid, P. M. Shankar, K. Soetanto, X. M. Lu "Nonuniform phase distribution in speckle analysis - Part I: Background and experimental demonstartion," IEEE Trans. Ultrason., Ferroelect., Freq. Contr., vol. 39, no. 3, pp. 352-358, May 1992, L. Weng, J. M. Reid, P. M. Shankar, K. Soetanto, X. M. Lu "Nonuniform phase distribution in speckle analysis - Part II: Parametric Expression and a Frequency Sweeping Technique to Measure Mean Scatterer Spacing," IEEE Trans. Ultrason., Ferroelect., Freq. Contr., vol. 39, no. 3, pp. 360-365, May 1992, V. M. Narayanan, R. C. Molthen, P. M. Shankar, L. Vergara, J. M. Reid, "Studies on Ultrasonic Scattering from Quasi-Periodic Structures," IEEE Trans. Ultrason., Ferroelect., Freq. Contr., vol. 44, no. 1, pp. 114-124, May 1992.

Particularly, in the two papers by Weng et al., the magnitude and the phase of the received signal are jointly employed to reveal the estimated complex vector distribution which is proved to be circle-arranged (i.e. uniform distribution for phase and Rayleigh distribution for magnitude) in case of random arrangements of scatterers whereas it assumes a different shape in case of a more organized scatterer pattern. Conversely, the paper by Narayanan et al. shows how the autocorrelation of the revealed complex signal in the spectral domain can be used to establish if the medium scatterers are arranged in a random or in a quasi-periodic manner. However, such prior art methods have been proved to be not so much powerful being restricted to a very particular case of discrimination involving the full complex received echo and thus both magnitude and phase extraction.

The object of the present invention is therefore to provide an effective, simple and reliable method for typing an object or an area of interest by exploiting the local characteristics of a generic radiation, particularly an ultrasonic wave, propagating through such object or region.

This and further objects and advantages, which the following text will make clear to those skilled in the art, are achieved essentially by means of a method for determining local characteristics of a target object comprising the steps of:

a) transmitting a signal into said object;
b) receiving reflection and/or transmission and/or scattering and/or diffraction and/or matter excitation signal or signals generated by the object in response to said signal;
c) extracting the phase or a parameter correlated to the phase of such response signal or signals;
d) applying one or more mathematical operators to such phase or parameter to determine one or more local parameters;
e) identifying area or areas of the object having common propagation properties from one or more of such local parameters;
f) determining direct or indirect local quantitative information on the physical properties of the target from at least one of said local parameters or a combination thereof as a function of the type of propagation identified in such area or areas.

The present invention is essentially based on the fact that by identifying areas having substantially the same propagation model, the phase of the received signal, particularly the statistical moments of its first derivative, can be used for determining, in a very simple and effective way without the need to solve complex wave-fields equations, local parameters related to density and/or elasticity and/or concentration, particularly their statistics, and thus the structure organization of the target object. This is obtained by extrapolating local parameters, particularly the statistical moment or moments of the first derivative of the phase of the received signal or signals, that are advantageously used both for locally identifying the propagation model characterizing area or areas of the target object and for extrapolating quantitative information related to the structure organization of such area or areas as a function of the type of propagation so identified. Particularly, the type of propagation models exemplary considered in the present invention are the free propagation model, the not fully developed speckle model and the fully developed speckle model. For more details see, for example, the above mentioned book by Kino and the papers by Weng et al. and by Narayanan et al.

The free propagation model is related to a complete absence of scatterers in the medium which is thus perfectly homogeneous with a constant propagation velocity. Conversely, speckle models are related to medium having scatterers. If such scatterers can be resolved, i.e. different scatterers producing different backscattered signals can be distinguished by the acquisition system, a not fully developed speckle model is applicable. This model is particularly capable to describe a population of particles dispersed in a liquid for low particle concentrations. As the number of particles per volume unit increases, the distance between scatterers decreases. When several scatterers fall inside the same resolution cell of the system, a fully developed speckle model has to be considered. The medium is no longer characterized by a concentration of scatterers, but, rather, by a unique physical/chemical phase or state having a determined elasticity and density.

Once the propagation model has been assessed, the statistical moments can be used to determine the physical properties correlated to such models. The applicant has, in fact, found that the phase of the received signal, particularly its derivative, has statistical characteristics that are respectively related to propagation velocity, density and elasticity in zones of the medium where the fully developed speckle model is applicable, and to concentration of dispersed particles in zones where the not fully developed speckle model is applicable.

Advantageously area or areas having common propagation properties are identified by comparing two or more local parameters to detect locally the type of propagation and/or the propagation model of the target. Particularly in area or areas corresponding to a not fully developed speckle, the local quantitative information is directly or indirectly related to a measure of concentration. In area or areas corresponding to a fully developed speckle, the local quantitative information is directly or indirectly related to a measure of density and/or elasticity and/or propagation velocities and/or variations thereof. In area or areas corresponding to a free propagation, the local quantitative information is directly or indirectly related to a measure of velocity of propagation.

Preferably, such local parameter or local parameters or quantitative information are transformed into an image data, i.e. image pixels or voxels, of such object. Particularly, a map of areas having a determined propagation model is determined, each area being defined by pixels or group of pixels values having an appearance scale univocally correlated to at least one local parameter or combination thereof.

According to an embodiment, the local parameter or parameters is/are determined by calculating the statistical moment or moments of the first derivative of the phase of the received signal or signals. Typically, the local quantitative information on the physical properties of the target is determined from one or more statistical moments of $a(t)$ through the estimation of the moment of corresponding order of the first derivative of the phase of the received signal or signals,

being $a(t) = \dfrac{\partial \log(v_a(t))}{\partial t} \cdot \varphi(t)$, where $v_a(t)$ is the velocity of propagation and $\varphi(t)$ the phase of the received signal or signals.

Advantageously the statistical moment of the second order of the first derivative of the phase of the received signal or signals is calculated from the variance of the phase for not fully developed speckle region or regions.

According to a preferred embodiment, at least one received signal is an ultrasonic signal. This may involve transmitting and receiving an ultrasound wave as in conventional ultrasound systems, but also generating a different type of excitation signal and receiving an ultrasound signal. The received ultrasound signal can be of any kind, for example, a reflection, transmission, diffraction signal or combination thereof.

When used in combination with conventional ultrasound systems, the step of identifying area or areas having common propagation properties can advantageously comprise identifying zones of strong attenuation with a conventional echographic imaging modality, like B-Mode, with the aim of discarding such zones from local parameter estimations.

The target object can be advantageously blood. In this case the local quantitative information can be the hematocrit or a parameter related thereof.

The target object can also be tissue. In this case the local quantitative information is, for example, a parameter related to the propagation speed. A bidimensional map of such a parameter is preferably superimposed on an image representing such tissue, for example by varying the opacity of the images.

The invention also relates to an echography device comprising an echography probe and means of acquiring and processing a return signal from an organ subjected to echographic examination, wherein said acquisition and processing means are programmed to implement a method as specified above.

Further improvements of the invention will form the subject of the dependent claims.

The characteristics of the invention and the advantages derived therefrom will be more apparent from the following description of non-limiting embodiments, illustrated in the annexed drawings.

Fig. 1 and Fig. 2 show respectively a simulation of the phase signal and the instantaneous frequency signal obtained from the acquisition and processing of a backscattered signal from a single scatterer.

Fig. 3 to 6 respectively show diagrams of average values of $E[\Psi]$, $E[(\Psi-E[\Psi])^2]$, $\dfrac{E\left[(\Psi - E[\Psi])^3\right]}{\sigma^3}$,

$\dfrac{E\left[(\Psi - E[\Psi])^4\right]}{\sigma^4}$ with respect to dispersion concentration of alumina powder for different values of depth z.

Fig 7 to 10 respectively show a bi-dimensional representation in grey levels of the mean (a), variance (b), skewness (c) and kurtosis (d) obtained with a test phantom of alumina powder in different concentrations, namely 3.1 mg/ml (Fig. 7), 6.1 mg/ml (Fig. 8), 12.3 mg/ml (Fig. 9), 24.6 mg/ml (Fig. 10).

Fig.11 illustrates a simplified block diagram of a method according to the invention.

From a mathematical point of view, a generic propagating wave with time varying propagation velocity $v_a(t)$ can be represented as a function of pulsation, time and space $(\omega,t,z)$ as following

$$F(\omega,t,z) = E(\omega,t) \cdot e^{-j\omega\left(t-\frac{z}{v_a(t)}\right)}$$

assuming a time and space invariant envelope indicated with $E(\omega,t)$. The previous formula depends on the assumption that the impulse envelope does not alter its original shape through propagation and thus corresponds, on a first approximation, to a far field wave. Moreover the propagation velocity does not depend on $\omega$ and thus the considered medium is not dispersive. In this case, the propagation velocity depends only on the local physical properties of the inspected medium along the propagation path of the considered wave.

The signal produced by an appropriate transducer while receiving the propagating wave and acquired by a generic acquisition system, can be still modelled as a function of pulsation, time and depth, i.e.

$$f(\omega,t,z) = A(\omega,t,z) \cdot e^{-j\varphi_a(\omega,t,z)} \otimes E(\omega,t) \cdot e^{-j\omega\left(t-\frac{z}{v_a(t)}\right)}$$

where $A(\omega,t,z)$ and $\varphi_a(\omega,t,z)$ are respectively the impulse response magnitude and phase of the acquisition system.

In a first approximation, if we assume an ideal acquisition system having infinite bandwidth and not introducing any phase distortion, it can be shown that, for every pulsation $\omega=\omega_0$, the phase of the coherently demodulated acquired signal is

$$\varphi(t) = \omega_0 \frac{z(t)}{v_a(t)}$$

where $z(t)$ has to be considered time varying being the propagation velocity generally not constant.

Thus, for a monochromatic wave, it can be established a direct relationship between the acquired signal phase $\varphi(t)$ and the velocity $v_a(t)$ of the propagating wave.

Let's consider the first derivative $\Psi(t)$ of the phase of the acquired signal,

$$\Psi(t) = \frac{\partial \varphi(t)}{\partial t} = \omega_0 \frac{\frac{\partial z(t)}{\partial t} v_a(t) - z(t) \cdot \frac{\partial v_a(t)}{\partial t}}{v_a^2(t)} = \omega_0 \left(1 - \frac{z(t)}{v_a^2(t)} \cdot \frac{\partial v_a(t)}{\partial t}\right) =$$

$$= \omega_0 - \frac{1}{v_a(t)} \cdot \frac{\partial v_a(t)}{\partial t} \cdot \varphi(t) = \omega_0 - \frac{\partial \log(v_a(t))}{\partial t} \cdot \varphi(t)$$

This expression shows that, in case of free propagation, the first derivative $\Psi(t)$ of the revealed phase $\varphi(t)$ is $\omega_0$ since $v_a(t)$ is completely constant being the medium perfectly homogeneous. For this reason the introduced quantity can be referred as the instantaneous frequency of the propagation wave.

The quantity $\Psi(t)$ can be considered the realization of a random process and therefore the principal statistical moments can be evaluated. Moreover, the process originating $\Psi(t)$ can be considered ergodic like the process originating $f(\omega,t)$ while receiving the propagating wave and, therefore, the statistical operator described in the following can be approximated by their temporal counterparts.

The statistical average of $\Psi(t)$ can be expressed as

$$\mu_1(\Psi(t)) = E[\Psi(t)] = \omega_0 - E\left[\frac{\partial \log(v_a(t))}{\partial t} \cdot \varphi(t)\right] =$$
$$= \omega_0 - E[a(t)] \qquad\qquad (1)$$

where

$$a(t) = \frac{\partial \log(v_a(t))}{\partial t} \cdot \varphi(t)$$

The variable part of the first order moment cannot be separated since the term $\dfrac{\partial \log(v_a(t))}{\partial t}$ and the term $\varphi(t)$ are not independent. In case of free propagation, the first order moment assumes the constant value $\omega_0$, being $v_a(t)$ constant.

The second order central moment can be expressed as

$$\mu_2(\Psi(t)) = \sigma^2_{\Psi(t)} = E\left[(\Psi - E[\Psi])^2\right] =$$
$$= E\left[\left(\omega_0 - \frac{\partial \log(v_a(t))}{\partial t} \cdot \varphi(t) - E\left[\omega_0 - \frac{\partial \log(v_a(t))}{\partial t} \cdot \varphi(t)\right]\right)^2\right] =$$
$$= E\left[\left(-\frac{\partial \log(v_a(t))}{\partial t} \cdot \varphi(t) + E\left[\frac{\partial \log(v_a(t))}{\partial t} \cdot \varphi(t)\right]\right)^2\right] =$$
$$= E\left[\left(\frac{\partial \log(v_a(t))}{\partial t} \cdot \varphi(t) - E\left[\frac{\partial \log(v_a(t))}{\partial t} \cdot \varphi(t)\right]\right)^2\right] =$$
$$= \sigma^2_{a(t)}.$$

Therefore, by applying the multiplicative formula for variance variables, the complete expression of the second moment of $\Psi(t)$ results in

$$\mu_2(\Psi(t)) = \sigma^2_{\Psi(t)} = \mu_2\left(\frac{\partial \log(v_a(t))}{\partial t}\right) + \mu_2(\varphi(t)) + 2\,\mathrm{cov}\left(\frac{\partial \log(v_a(t))}{\partial t}, \varphi(t)\right) \qquad (2)$$

The above expression of the variance of $\Psi(t)$ thus presents three terms. The first one still depends directly only on $v_a(t)$. The second one is the variance of the revealed phase while the third mixed term cannot be cancelled because $\dfrac{\partial \log(v_a(t))}{\partial t}$ and $\varphi(t)$ are not independent in general. However, three different cases can be treated separately. In case of free propagation, there are both no significant phase and propagation velocity variations and therefore the considered moment vanishes to zero in each of the three terms. Differently, when considering the propagation in variable concentration dispersion where the propagation velocity does not depart considerably from that one of the liquid where the particles are immersed, the first term is not noticeably significant and therefore also the covariance can be neglected with respect to the second term. Therefore, for such kind of media, the introduced moment $\mu_2(\Psi(t))$ is approximately equal to the variance of the revealed phase. A similar assumption cannot be stated, a priori, for complex biological media which present not negligible propagation velocity variations and thus all the three term of the previous expression has to be considered. However, in all those cases where the covariance term has been proved to be neglectable with respect to the other ones, the first term can be extrapolated by difference since the second term can be computed directly from the phase signal. Therefore, in these cases, a local parameter related to velocity variations can be estimated and therefore indirect assessment of physical quantities such density and elasticity can be performed.

A similar approach can be exploited to derive the expression of higher order moments of $\Psi(t)$ with respect to the moments of $a(t)$. In particular, for higher order moments, we have

$$\gamma_{n-2}(\Psi(t)) = \frac{E\left[\left(\left(\omega_0 - \dfrac{\partial \log(v_a(t))}{\partial t} \cdot \varphi(t) - E\left[\omega_0 - \dfrac{\partial \log(v_a(t))}{\partial t} \cdot \varphi(t)\right]\right)\right)^n\right]}{\sigma_{\Psi(t)}^n} =$$

$$= \frac{E\left[\left(-a(t) + E[a(t)]\right)^n\right]}{\sigma_{\Psi(t)}^n} = \tag{3}$$

$$= \frac{(-1)^n \cdot \left(E\left[\left(a(t) - E[a(t)]\right)^n\right]\right)}{\sigma_{a(t)}^n} = (-1)^n \gamma_{n-2}(a(t)).$$

The previous relation shows a direct relationship between the $n^{th}$ moment of $\Psi(t)$, which can be estimated from the received signal, and the $n^{th}$ moment of $a(t)$ which, being related to the velocity of propagation, contains structural information of the inspected medium.

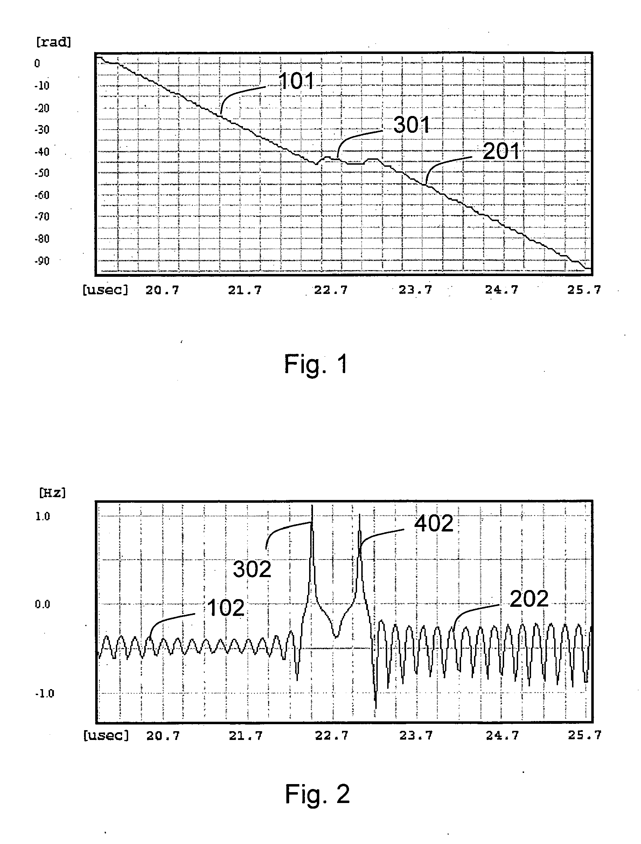

The applicant, while investigating the property of the phase of backscattered signals, found a very interesting result from the simulation of the phase response of a single point scatterer obtained by coherent demodulation. Fig. 1 shows the phase of the response of a trace that intersects the scatterer almost in the central position. Other parallel traces lying nearby this one have similar aspect. Outside the central zone characterized by the presence of the scatterer, the response shows a decreasing phase 101, 201 with a corresponding constant $\Psi(t)$, which is typical of the free propagation. In the central zone, the phase 301 around the scatterer position is almost constant (see Fig. 1) whereas $\Psi(t)$ presents two spikes 302, 402 as shown in Fig. 2. If a dispersion of particle in a liquid is considered, then multiple scatterers are present and thus the signal $\Psi(t)$ presents a number of spikes which is proportional to the number of scatterers lying on the inspected line of sight. In this case, the statistics of the instantaneous frequency $\Psi(t)$ result directly correlated to the scatterer concentration, i.e. to the number of scatterers in the considered medium. This direct correlation exists until the few scatterers are present in the resolution cell of the system. For higher concentration a developed speckle pattern is produced and therefore random phase interferences are not represented by a series of spikes but instead are represented by a random varying phase signal. In such a case, the concept of concentration looses its significance whereas the concepts of density and elasticity assume importance since the medium can be considered as a single phase object instead of a dispersion of particles in a liquid.

The above considerations have been validated by some results obtained by experiments performed as described in the following. All experiments have been carried out using distilled water at room temperature. The insonified test-object is a $50\mu m$ thick latex tube with a diameter of 4 cm filled with the considered dispersion of alumina powder and distilled water. This measure chamber has been immersed in a water tank acoustically coupled to a Esaote LA523 linear array probe oriented horizontally in order to insonify the transverse section of the immersed latex tube. The following set up has been used to acquire the signal. The analog front-end of the Esaote Technos scanner has been employed for probe excitation, for beamforming and for analog to digital conversion. The digital signal has been transferred to the elaboration apparatus FEMMINA (Fast Echographic Multi-parameters Multi-Image Novel Apparatus) by means of a high rate optical link. Such apparatus has been disclosed, for example, in L. Masotti et al. "FEMMINA Real-Time, Radio-frequency Echo-Signal Equipment for Testing Novel Investigation Methods", IEEE Trans. Ultrason., Ferroelect., Freq. Contr., vol. 53, no. 10, pp. 1783-1795, October 2006.

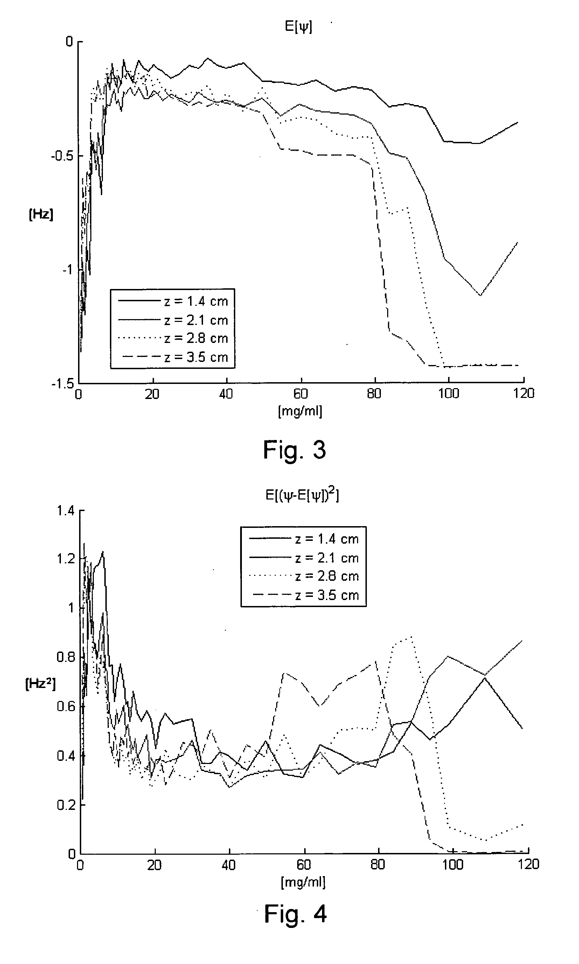

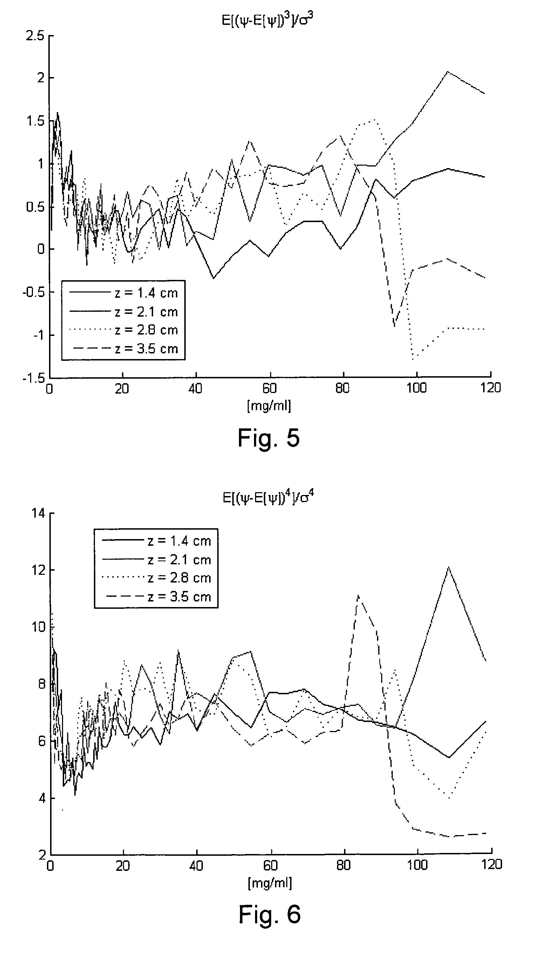

Fig. 3 to 6 show, respectively, the average values of the moments of $\Psi(t)$ from the first to the fourth order, i.e. mean, variance, skewness, kurtosis, $E[\Psi]$, $E[(\Psi - E[\Psi])^2]$, $\dfrac{E\left[(\Psi - E[\Psi])^3\right]}{\sigma^3}$, $\dfrac{E\left[(\Psi - E[\Psi])^4\right]}{\sigma^4}$ obtained for different values of depth using the above experimental set-up with a dispersion concentration of alumina powder. These figures show a first region (0-15 [mg/ml]) where phase contribute of the single particles are distinguishable and therefore where the statistics of $\Psi(t)$ are directly related to the concentration value. This region is characterized by values of $\Psi(t)$ normalized variance ranging in [0 - 1.2 Hz$^2$], by high values of skewness and a variable value of the first moment of $\Psi(t)$ with respect to dispersion concentration. It is also possible to reveal from Fig. 3 to 6 the fully developed speckle region (20-80 [mg/ml]) at the right of a trade-off concentration $c_0$ ($\approx$18 [mg/ml]). In this case the introduced statistics assumes constant values around the focal region since they are not dependent on the dispersion concentration (about 0.2 Hz, 0.35 Hz$^2$, 0.5, 7.2 respectively). In this region, the statistics have been proven to be dependent on the type of particle dispersed. Particularly, different granulometry values result in a different set of constant values for the statistics of $\Psi(t)$. This implies that, for fully developed speckle patterns, the introduced statistics are dependent on at least a physical parameter characterizing the inspected medium.

For higher values of concentration the analysis is not possible since the attenuation of the more superficial layers does not guaranties a sufficient SNR ratio (strong attenuation type of propagation).

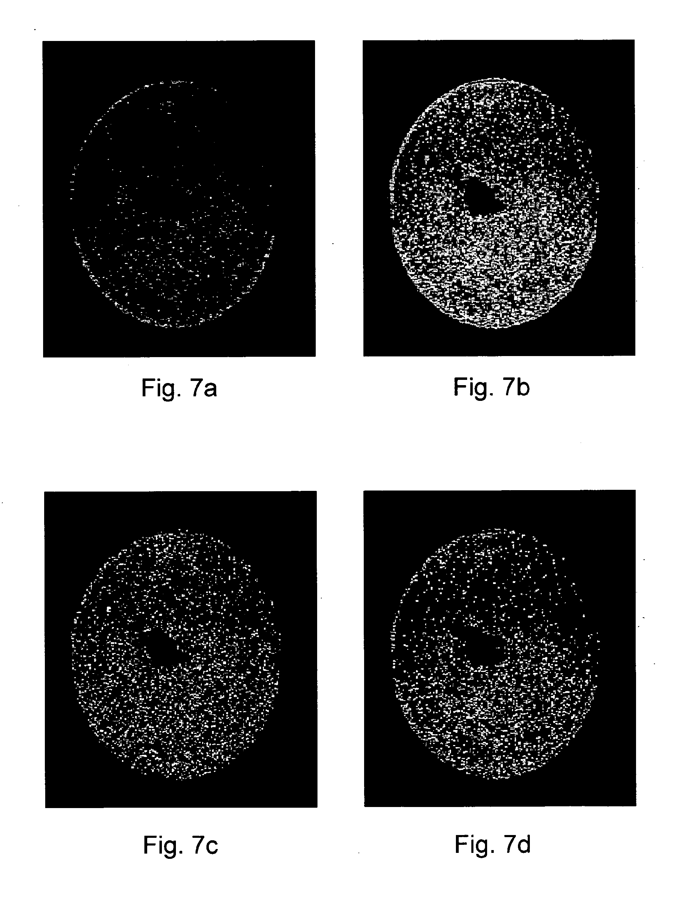

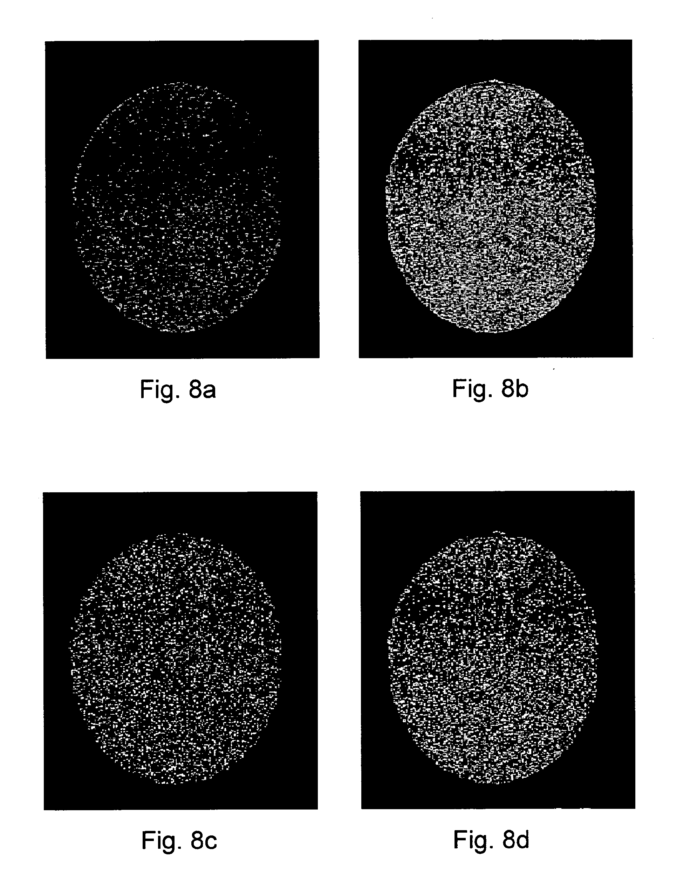

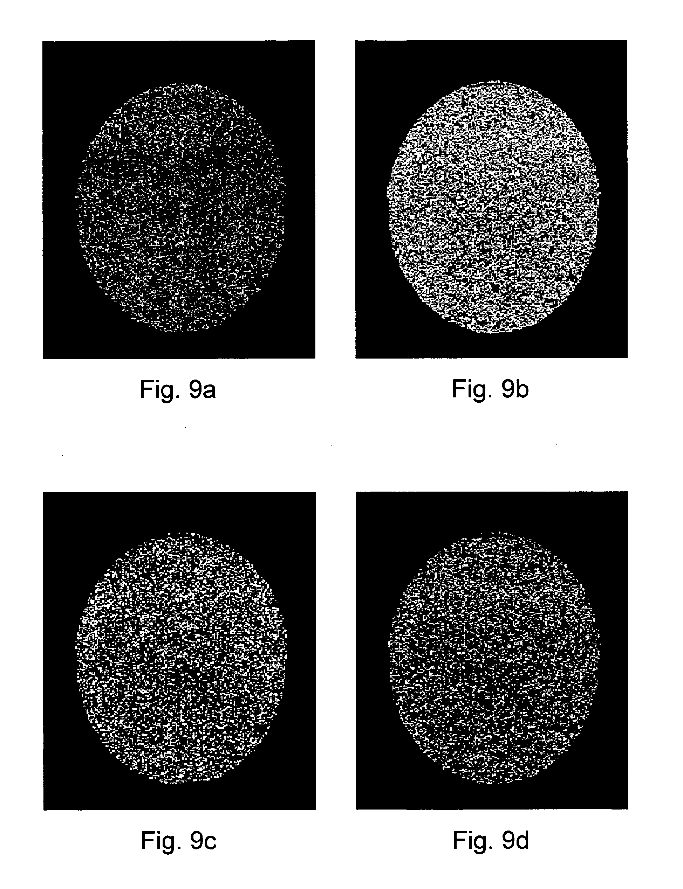

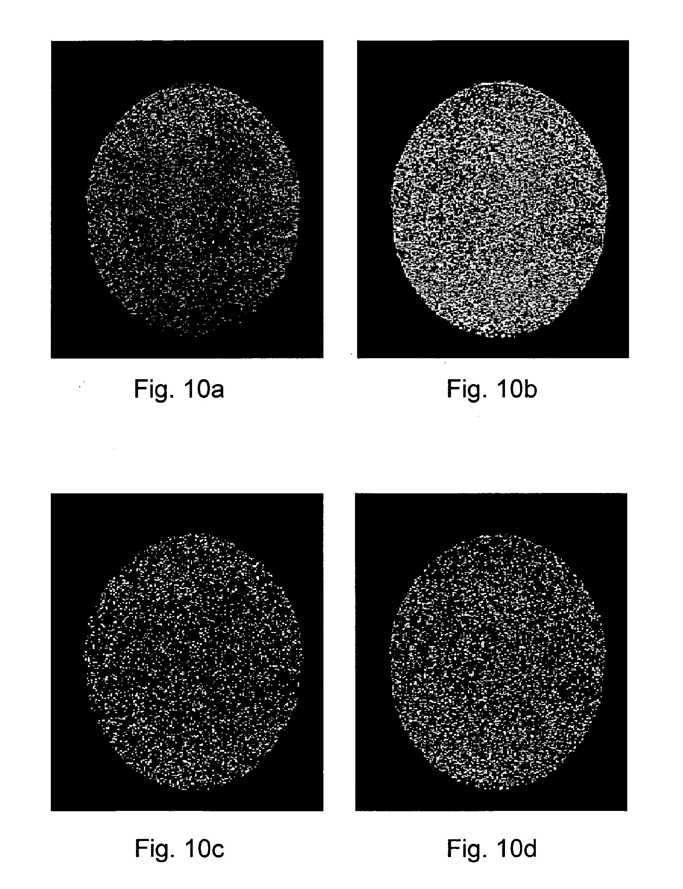

The described statistical quantities can be used both for quantitative parameter evaluation and/or for an alternative imaging modality showing, for example, a spatial variation of the discussed parameters. Fig. 7 to 10 respectively show a bi-dimensional representation in grey levels of the mean (a), variance (b), skewness (c) and kurtosis (d) obtained with a test phantom of alumina powder in different concentrations, namely 3.1 mg/ml (Fig. 7), 6.1 mg/ml (Fig. 8), 12.3 mg/ml (Fig. 9), 24.6 mg/ml (Fig. 10). It is possible to observe how the brightness of both the first and the second order moments increase in Fig. 8 with respect to Fig. 7 and in Fig. 9 with respect Fig. 8. All these three figures are relative to dispersions generating not fully developed speckle pattern and indeed the brightness of the first two moments show clearly the direct dependence on the dispersion concentration. Fig. 10 is relative to a dispersion generating a fully-developed speckle pattern. As discussed, it is possible to observe a sort of saturation of the brightness of first order moment image as well as a reduction of the brightness of the second order moment image. Because of the substantial constancy of the values of the moments, in this propagation modality, any other image produced for higher concentration has very similar values of brightness of Fig. 10.

The free propagation condition can be easily detected because all the moments assume a zero value as shown in all the figures outside the measurement chamber. It is also interesting to note that for very low concentration, as shown in Fig. 7, the moving particle tend to position themselves near the latex tube wall for centrifugal effect leaving an internal vortex area not populated by any scattering particle. The system reveals clearly this phenomenon since the free propagation modality is well distinguishable from all other propagation modalities.

Moreover, since the system operates in real-time, it is also possible to detect temporal variations of concentration or other physical parameters related to the propagation modality, which can give further insight in the medium characterization.

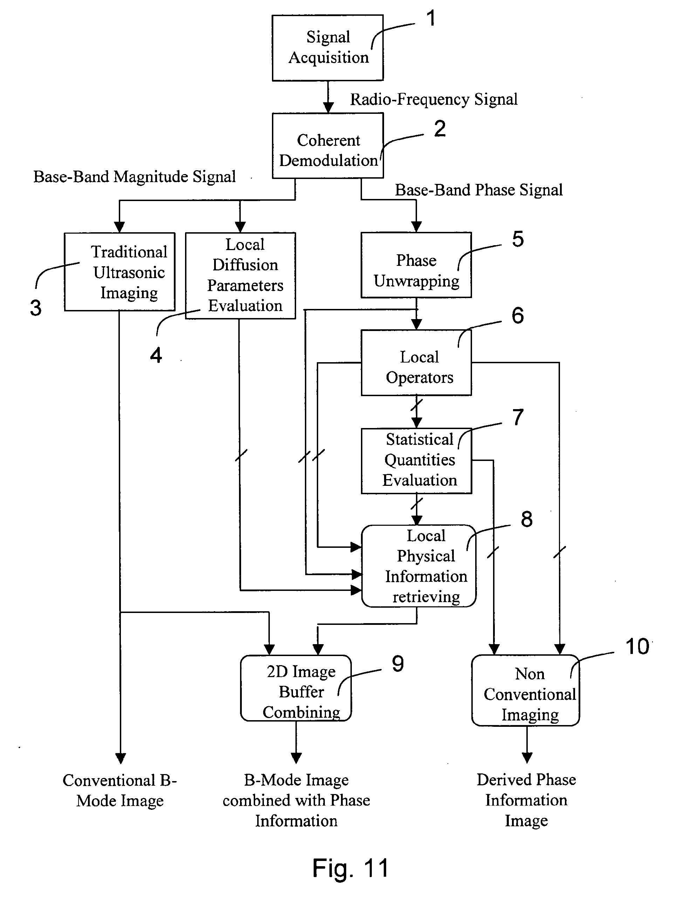

Fig. 11 describes an exemplary block diagram of a system implementing the method of the invention. After a generic signal acquisition including, in general, various standard preliminary elaborations such as A/D conversion, beamforming, Time-Gain compensation and the like, generally indicated with reference 1, the radiofrequency signal is coherently demodulated (2) in order to reveal both the magnitude and phase signals. The signal is further elaborated by usual image processing algorithm for a clear B-mode image generation (3). This signal is also optionally used to evaluate how the backscattered energy from the medium is distributed. Indeed, for a generally dense medium, all the backscattered energy derives from the superficial regions and no significant signals are backscattered below a determined depth. By evaluating the depth where the brightness of the B-mode image is sufficiently high (4), it is possible to establish if each investigated area can be considered to have a significant backscattered phase signal or just a not significant random noise contribution in order to avoid further processing of the phase for not significant values. In case of sufficient signal to noise ratio (SNR), each column of the generated phase image is subjected to phase unwrapping (5) in order to reveal the absolute value of the received phase for each depth. After that, a mathematical operator (6), such as, for example, the first derivative, is applied to the unwrapped phase image and thus an image of a parameter physically related to the received phase is computed. The statistics of such parameter are then computed (7) on a sliding window assuming the generating process to be ergodic. The statistics image and the physical parameter are then combined with appropriate decision rules and formulas capable to retrieve the local propagation model and the physical parameter values related to the local structural organization (8). Such information is then used to produce masks to be superimposed, in real-time, to the conventional B-mode image as an augmented information output of the system (9). The physical parameter image and/or its statistics images can also be displayed as independent non-conventional imaging outputs for real-time evaluation of the structural organization of the inspected medium (10).

The method and the device according to the present invention can be used, for example, for making direct or indirect measurements of concentration, for example of blood thus detecting a parameter related to the hematocrit, or for typing dense objects like biological tissues. In this case the local quantitative information is a parameter related to the propagation speed. A bidimensional or tridimensional map of such a parameter can be advantageously superimposed on an image representing such tissue, like for example an ultrasound image, a MRI image, a X-ray image, a SPECT, PECT image or the like. The method according to the invention can also be used in the non-biological field, for example in non-destructive applications.

Although the invention has been mainly disclosed with reference to ultrasounds, the skilled person would appreciate that also other type of signals can be used, for example MRI spin echo signals, all without departing from the guiding principle of the invention disclosed above and claimed below.

**Claims**

1. A method for determining local characteristics of a target object comprising the following steps:

   a) transmitting a signal into said object;
   b) receiving reflection and/or transmission and/or scattering and/or diffraction and/or matter excitation signal or signals generated by the object in response to said signal,
   **characterized in** further comprising the following steps:
   c) extracting the phase or a parameter correlated to the phase of such response signal or signals;
   d) applying one or more mathematical operators to such phase or parameter to determine one or more local parameters;
   e) identifying area or areas of the object having common propagation properties from one or more of such local parameters;
   f) determining direct or indirect local quantitative information on the physical properties of the target from at least one of said local parameters or a combination thereof as a function of the type of propagation identified in such area or areas.

2. Method according to claim 1, wherein step d) comprises:

   d.1) calculating the derivative of such phase or such parameter correlated to the phase;
   d.2) applying one or more statistic operators to such derivative.

3. Method according to claim 1 or 2, wherein such area or areas are identified by comparing two or more local parameters to detect locally the type of propagation and/or the propagation model of the target.

4. Method according to any preceding claim 1 to 3, wherein area or areas corresponding to a not fully developed speckle are identified, the local quantitative information in such area or areas being directly or indirectly related to a measure of concentration.

5. Method according to any preceding claim 1 to 4, wherein area or areas corresponding to a fully developed speckle are identified, the local quantitative information in such area or areas being directly or indirectly related to a measure of density and/or elasticity and/or propagation velocities and/or variations thereof.

6. Method according to any preceding claim 1 to 5, wherein area or areas corresponding to a free propagation are identified, the local quantitative information in such area or areas being directly or indirectly related to a measure of velocity of propagation.

7. Method according to any preceding claim 1 to 6, wherein such local parameter or local parameters or quantitative information are transformed into an image data, i.e. image pixels or voxels, of such object.

8. Method according to any preceding claim 1 to 7, wherein a map of areas having a determined propagation model is determined, each area being defined by pixels or group of pixels values having an appearance scale univocally correlated to at least one local parameter or combination thereof.

9. Method according to any preceding claim 1 to 8, wherein the local parameter or parameters are determined by calculating the statistical moment or moments of the first derivative of the phase of the received signal or signals.

10. Method according to any preceding claim 1 to 9, wherein local quantitative information on the physical properties of the target is determined from one or more statistical moments of $a(t)$ through the estimation of the moment of corresponding order of the first derivative of the phase of the received signal or signals, being

$$a(t) = \frac{\partial \log(v_a(t))}{\partial t} \cdot \varphi(t)\text{,}$$  where $v_a(t)$ is the velocity of propagation and $\varphi(t)$ the phase of the received signal or signals.

11. Method according to any preceding claim 1 to 10, wherein the statistical moment of the second order of the first derivative of the phase of the received signal or signals is calculated from the variance of the phase for not fully developed speckle region or regions.

12. Method according to any of the preceding claim 1 to 11, wherein at least one received signal is an ultrasonic signal.

13. Method according to claim 12, wherein the step of identifying area or areas having common propagation properties comprises identifying zones of strong attenuation with a conventional echographic imaging modality, like B-Mode representation, such zones being discarded from the local parameter estimations.

14. Method according to any of the preceding claim 1 to 13, wherein the target object is blood, the local quantitative information being the hematocrit.

15. Method according to any of the preceding claim 1 to 14, wherein the target object is tissue, the local quantitative information is a parameter related to the propagation speed, a bidimensional or tridimensional map of such a parameter being superimposed on an image representing such tissue.

16. Echography device comprising an echography probe and means of acquiring and processing a return signal from a structure subjected to echographic examination, **characterized in that** said acquisition and processing means is programmed to implement a method according to one or more of claims 1 to 15.

Fig. 1

Fig. 2

$E[\psi]$

Fig. 3

$E[(\psi-E[\psi])^2]$

Fig. 4

$$E[(\psi-E[\psi])^3]/\sigma^3$$

Fig. 5

$$E[(\psi-E[\psi])^4]/\sigma^4$$

Fig. 6

Fig. 7a

Fig. 7b

Fig. 7c

Fig. 7d

Fig. 8a

Fig. 8b

Fig. 8c

Fig. 8d

Fig. 9a

Fig. 9b

Fig. 9c

Fig. 9d

Fig. 10a

Fig. 10b

Fig. 10c

Fig. 10d

Fig. 11

Europäisches
Patentamt
European
Patent Office
Office européen
des brevets

## EUROPEAN SEARCH REPORT

**Application Number**

EP 08 16 3577

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASOTTI L ET AL: "Femmina: advanced radio frequency ultrasonic platform for biomedical applications" BIOMEDICAL CIRCUITS AND SYSTEMS, 2004 IEEE INTERNATIONAL WORKSHOP ON SINGAPORE 1-3 DEC. 2004, PISCATAWAY, NJ, USA,IEEE, 1 December 2004 (2004-12-01), pages 404-409, XP010810076 ISBN: 978-0-7803-8665-5 | 1,7,8, 12,16 | INV. G01S7/52 |
| Y | * abstract * Sections 2. - 4. | 2,3 | |
| X | WENG L ET AL: "Non-uniform ultrasound speckle phase distribution applied to scatterer spacing estimation (medical imaging application)" 19901204; 19901204 - 19901207, 4 December 1990 (1990-12-04), pages 1593-1596, XP010010266 | 1,3,7,8, 12,16 | |
| Y | | 2 | |
| Y | US 4 648 276 A (KLEPPER JOHN R [US] ET AL) 10 March 1987 (1987-03-10) * abstract; figures 8-12 * * column 11, line 22 - column 14, line 35 * | 2,3 | TECHNICAL FIELDS SEARCHED (IPC) G01S |
| A | DRAPER D C ET AL: "UNWRAPPED-PHASE DISTRIBUTION MODEL FOR SPECKLE AND TURBULENCE" APPLIED OPTICS, OSA, OPTICAL SOCIETY OF AMERICA, WASHINGTON, DC, vol. 31, no. 18, 20 June 1992 (1992-06-20), pages 3481-3487, XP000273923 ISSN: 0003-6935 * the whole document * | 1-16 | |

-/--

The present search report has been drawn up for all claims

| Place of search | Date of completion of the search | Examiner |
|---|---|---|
| Munich | 2 February 2009 | Zaneboni, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 08 16 3577

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BARTELT H: "COMPUTATION OF LOCAL DIRECTIVITY, SPEED OF SOUND AND ATTENUATION FROM ULTRASONIC REFLECTION TOMOGRAPHY DATA" ULTRASONIC IMAGING, DYNAMEDIA INC., SILVER SPRING, MD, US, vol. 10, no. 2, 1 April 1988 (1988-04-01), pages 110-120, XP000000427 ISSN: 0161-7346 * the whole document * | 1-16 | |
| D,A | LI WENG ET AL: "NONUNIFORM PHASE DISTRIBUTION IN ULTRASOUND SPECKLE ANALYSIS-. \PART I: BACKGROUND AND EXPERIMENTAL DEMONSTRATION" IEEE TRANSACTIONS ON ULTRASONICS, FERROELECTRICS AND FREQUENCY CONTROL, IEEE, US, vol. 39, no. 3, 1 May 1992 (1992-05-01), pages 352-359, XP000289696 ISSN: 0885-3010 * the whole document * | 1-16 | TECHNICAL FIELDS SEARCHED (IPC) |
| D,A | LI WENG ET AL: "NONUNIFORM PHASE DISTRIBUTION IN ULTRASOUND SPECKLE ANALYSIS-. \PART II: PARAMETRIC EXPRESSION AND A FREQUENCY SWEEPING TECHNIQUE TO MEASURE MEAN SCATTERER SPACING" IEEE TRANSACTIONS ON ULTRASONICS, FERROELECTRICS AND FREQUENCY CONTROL, IEEE, US, vol. 39, no. 3, 1 May 1992 (1992-05-01), pages 360-365, XP000289697 ISSN: 0885-3010 * the whole document * | 1-16 | |

-/--

The present search report has been drawn up for all claims

| Place of search | Date of completion of the search | Examiner |
|---|---|---|
| Munich | 2 February 2009 | Zaneboni, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 08 16 3577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | MANOJ NARAYANAN V ET AL: "Studies on Ultrasonic Scattering from Quasi-Periodic Structures" IEEE TRANSACTIONS ON ULTRASONICS, FERROELECTRICS AND FREQUENCY CONTROL, IEEE, US, vol. 44, no. 1, 1 January 1997 (1997-01-01), pages 114-124, XP011062815 ISSN: 0885-3010 * the whole document * ----- | 1-16 | |

TECHNICAL FIELDS
SEARCHED (IPC)

The present search report has been drawn up for all claims

| Place of search | Date of completion of the search | Examiner |
|---|---|---|
| Munich | 2 February 2009 | Zaneboni, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 16 3577

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2009

| Patent document cited in search report | | Publication date | Patent family member(s) | | Publication date |
|---|---|---|---|---|---|
| US 4648276 | A | 10-03-1987 | DE | 3585694 D1 | 30-04-1992 |
| | | | EP | 0150997 A2 | 07-08-1985 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4926870 A
- US 4913157 A
- US 4361154 A
- US 5817018 A
- US 5458130 A
- US 6221019 B
- US 6322507 B
- US 6328695 B
- US 6899680 B

- US 7112173 B
- US 4807635 A
- US 4777958 A
- US 5115808 A
- US 5453576 A
- US 7291109 B
- US 5062296 A
- US 5588032 A

**Non-patent literature cited in the description**

- **Gordon S. Kino.** Acoustic Waves: Devices, Imaging, and Analog Signal Processing. Prentice-Hall, INC, 1987
- **L. Weng ; J. M. Reid ; P. M. Shankar ; K. Soetanto ; X. M. Lu.** Nonuniform phase distribution in speckle analysis - Part I: Background and experimental demonstartion. *IEEE Trans. Ultrason., Ferroelect., Freq. Contr.,* May 1992, vol. 39 (3), 352-358
- **L. Weng ; J. M. Reid ; P. M. Shankar ; K. Soetanto ; X. M. Lu.** Nonuniform phase distribution in speckle analysis - Part II: Parametric Expression and a Frequency Sweeping Technique to Measure Mean Scatterer Spacing. *IEEE Trans. Ultrason., Ferroelect., Freq. Contr.,* May 1992, vol. 39 (3), 360-365

- **V. M. Narayanan ; R. C. Molthen ; P. M. Shankar ; L. Vergara ; J. M. Reid.** Studies on Ultrasonic Scattering from Quasi-Periodic Structures. *IEEE Trans. Ultrason., Ferroelect., Freq. Contr.,* May 1992, vol. 44 (1), 114-124
- **L. Masotti et al.** FEMMINA Real-Time, Radio-frequency Echo-Signal Equipment for Testing Novel Investigation Methods. *IEEE Trans. Ultrason., Ferroelect., Freq. Contr.,* October 2006, vol. 53 (10), 1783-1795